Europäisches Patentamt

European Patent Office

Office européen des brevets

(19)

(11) Publication number: **0 187 280**
**B1**

# EUROPEAN PATENT SPECIFICATION

(12)

(45) Date of publication of patent specification: **05.07.89**

(21) Application number: **85115614.1**

(22) Date of filing: **09.12.85**

(51) Int. Cl.⁴: **F 02 M 31/08,** F 02 M 1/16, F 02 M 25/00, F 02 M 31/06, F 02 M 31/10

(54) **Supply and control system for a mainly ethanol-powered internal combustion engine.**

(30) Priority: **21.12.84 IT 6827584**

(43) Date of publication of application: **16.07.86 Bulletin 86/29**

(45) Publication of the grant of the patent: **05.07.89 Bulletin 89/27**

(84) Designated Contracting States: **DE FR GB SE**

(56) References cited:
DE-A-3 036 271
US-A-3 714 933
US-A-3 827 417
US-A-4 079 715
US-A-4 161 930
US-A-4 441 467

PATENT ABSTRACTS OF JAPAN, vol. 2, no. 63 (M-78), 13th May 1978, page 1085 M 78; & JP - A - 53 25715 (FUJI JUKOGYO) 09-03-1978
PATENT ABSTRACTS OF JAPAN, vol. 5, no. 190 (M-100)862r, 4th December 1981; & JP - A - 56 113 040 (DAIHATSU) 05-09-1981

(73) Proprietor: **FIAT AUTO S.p.A.**
**Corso Giovanni Agnelli 200**
**I-10135 Torino (IT)**

(72) Inventor: **Martinez, Pasquale**
**Via Rosmini, 5**
**I-10100 Torino (IT)**
Inventor: **Fiore, Luigi**
**Via Spoleto, 4**
**I-10100 Torino (IT)**
Inventor: **Tognetti, Mario**
**Via Michele Coppino, 89**
**I-10100 Torino (IT)**
Inventor: **Schiavuzzi, Roberto**
**Via Biella, 8**
**I-10100 Torino (IT)**

(74) Representative: **Prato, Roberto et al**
**c/o Ingg. Carlo e Mario Torta Via Viotti 9**
**I-10121 Torino (IT)**

Courier Press, Leamington Spa, England.

## Description

The present invention relates to a supply and control system for a mainly ethanol-powered internal combustion engine, the said system being particularly suitable for use on cars.

Engines run on fuel consisting mainly of ethanol (ethyl alcohol) are known to pose a number of supply problems under various operating conditions (engine start-up, relatively low ambient temperature, low-temperature fuel mixture, etc.) which may jeopardise smooth running of the vehicle.

Among the warming-up systems, it is known from US—A—4 079 715 a system comprising first means for heating, by means of the exhaust gas from the said engine, the fuel mixture in the intake pipe, as a function of the vacuum existing inside the said intake pipe, the said first means comprising valve means located in one section of an exhaust pipe on the said engine, and the choke setting of which within said section is controlled by the said vacuum; up-and downstream from the said section pipes being connected for recirculating the said exhaust gas towards an area surrounding the said intake pipe, and the said valve means being controlled by a rod on a pneumatic actuator, the operating chamber of which communicates with the said intake pipe, over the said pneumatically-communicating portion beween the said pneumatic actuator and the said intake pipe second means being provided for respectively retarding or not the said pneumatic communication.

The aim of the present invention is to provide a supply and control system for a mainly ethanol-powered internal combustion engine, designed to ensure smooth running of the engine under all operating conditions.

With this aim in view, the present invention relates to a supply and control system for a mainly ethanol-powered internal combustion engine, characterised by the fact that the said second means are selectively controlled by an ambient temperature sensor; and the said second means comprise a 3-way electrovalve of which two ways are for switching and of which the common way is connected towards the said intake pipe, whereas the said two switch ways are connected to the said pneumatic actuator, one being connected directly and the other via an element provided for the said delay in pneumatic communication.

A non-limiting arrangement of the present invention will now be described with reference to the attached drawings in which:

Figure 1 shows a partially-sectioned, schematic view of part of an internal combustion engine fitted with a supply and control system according to the present invention;

Figure 2 shows a side view of a component element on the Figure 1 supply and control system;

Figure 3 shows a top view of the Figure 2 component element connected schematically to the carburettor and to a further component element on the supply and control system according to the present invention;

Figure 4 shows a block diagram of a further part of the supply and control system according to the present invention;

Figure 5 shows a section of a component element on the Figure 4 block diagram.

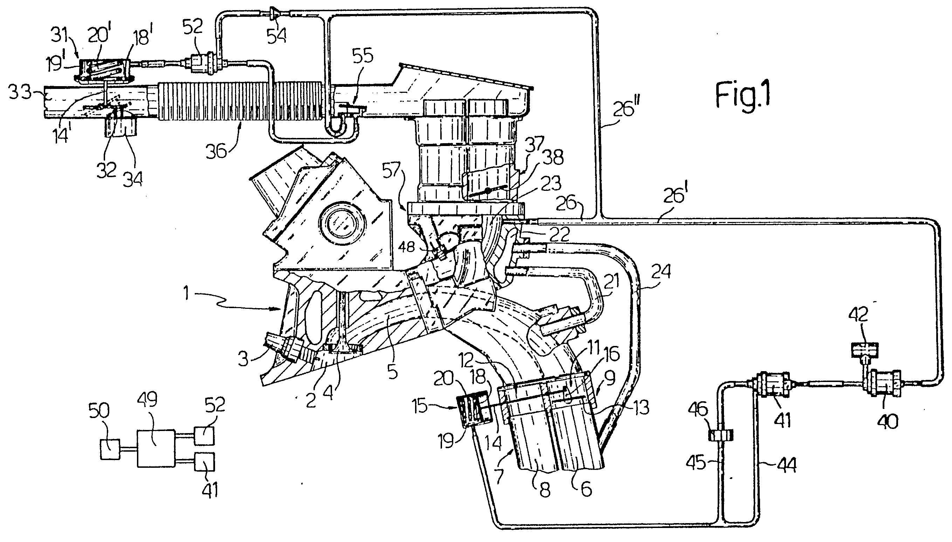

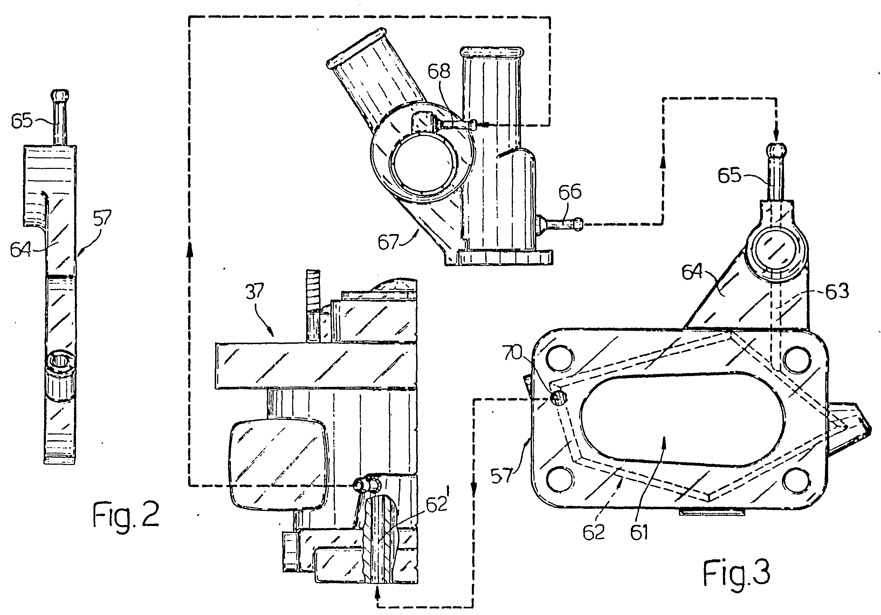

Number 1 in Figure 1 indicates an internal combustion engine (conveniently but not necessarily four-cylinder) of which is illustrated part of the combustion chamber 2, with a sparking plug 3 and exhaust valve 4. The latter controls communication with an exhaust pipe 5 at the end of which, towards a section 6 of an exhaust pipe 7 having two side-by-side sections 6 and 8, is located a body 9 defining two internal through openings 11 and 12 communicating respectively with sections 6 and 8 of exhaust pipe 7. In more detail, opening 11 may conveniently communicate with exhaust pipe 5 relative, for example, to the first and fourth cylinder; whereas the exhaust pipe relative to the second and third cylinder may communicate with opening 12. When the said opening 12 is clear, opening 11 is choked by a pivoted diaphragm 13, the choke setting of which over opening 11 is controlled by a rod 14 conveniently located outside body 9 and controlled by a pneumatic actuator 15. In more detail, one end of rod 14 is pivoted on a plate 16 secured angularly on the rotation axis of diaphragm 13, whereas the other end is connected to a plate 18 on actuator 15, the latter being of essentially known type and defining, by means of a flexible internal membrane, an operating chamber 19 housing a spring 20 for pushing plate 18 outwards. One end of a pipe 21 is connected in sealed manner so as to communicate with exhaust pipe 5, whereas the other end of the said pipe 21 is connected so as to communicate with compartment 22 formed about intake pipe 23 for the intake of fuel mixture for engine 1. Conveniently, a similar pipe 21 may be connected between the fourth cylinder exhaust pipe and the said compartment 22. To the latter is also connected, in communicating manner, one end of a pipe 24, the other end of which is connected, in communicating manner, to section 6 of exhaust pipe 7, downstream from body 9. Intake pipe 23 is connected, in communicating manner, to one end of a pipe 26 having a first branch 26′ connected to pneumatic actuator 15, via elements described later on, and a second branch 26″ connected, also via elements described later on, to a pneumatic actuator 31 of the same known type as actuator 15; the said actuator 31 having its component parts numbered in the same way as on actuator 15, plus a minute sign (′), and having a rod 14′ controlling the position of a diaphragm 32 for combined choking of a cold-air inlet pipe 33 and a hotter-air inlet pipe 34. The said air is mixed in a subsequent pipe 36 from which it is sent, through appropriate filtering means (not shown), to a carburettor 37 with a throttle 38. Branch 26′ is fitted with a first 3-way electrovalve 40 having its common outlet connected to the inlet of a second 3-way electrovalve 41, and its two switch ways connected respectively to branch 26' and filter 42 communicating externally. Electrovalve 41, in turn, has its two switch ways connected respectively to two pipe branches 44 and 45 connected to operating chamber 19 on pneumatic actuator 15; pipe branch 44 being connected directly and pipe branch 45 via a known type of series-connected valve 46 for retarding pneumatic communication. Operation of electrovalve 40 is controlled by a temperature switch 48 located inside intake pipe 23 and designed to trip at a given temperature, e.g. 90°C. Electrovalve 41, on the other hand, is controlled by a circuit block 49 controlled by a temperature switch 50 sensitive to ambient temperature and designed to trim at ambient temperatures, for example, below 20°C. The said circuit block 49 also controls operation of electrovalve 52, the latter being similar to electrovalves 40 and 41 and having a common pipe connected so as to communicate pneumatically with operating chamber 19' on pneumatic actuator 31, and two switch pipes connected respectively towards branch 26'' via a one-way valve 54 and a known type of thermal sensor 55 in the air mixture conveying zone upstream from carburettor 37. Between the base of the said carburettor 37 and the inlet on intake pipe 23, provision is made for a spacer plate 57 shown more clearly in Figures 2 and 3 and having a through opening 61 about which is formed, inside plate 57 itself, a duct 62 for the circulation of cooling liquid heated at the output of engine 1. In more detail, the said duct 62 is shaped in the form of a closed polygon communicating with an inlet duct 63 coming out of a projecting portion 64 of plate 57 through an outer tube 65; the latter being connected to a tube 66 coming out of a known type of thermostatic unit 67 on the cooling liquid circuit of engine 1. The said thermostatic unit 67 is also provided with a return tube 68 communicating hydraulically with a vertical-axis hole 70 formed on plate 57 and communicating with duct 62, and with duct 62' formed on carburettor 37 for heating the part about the progressive supply holes.

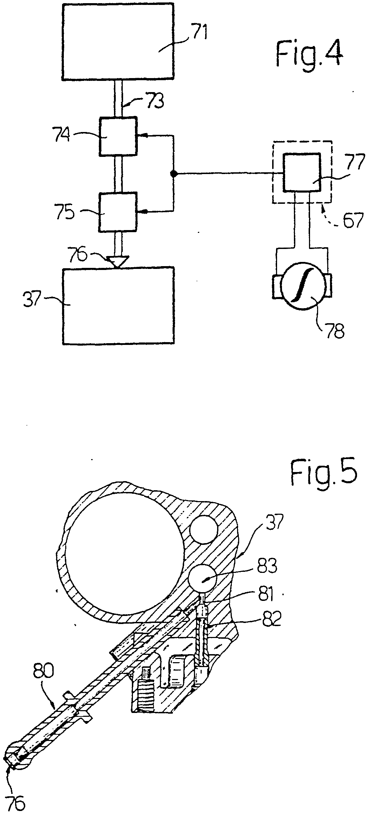

Figure 4 shows a block diagram of the extra petrol supply system for starting up engine 1. In detail, a petrol tank 71 is connected for supplying the carburettor 37 via a pipe 73 having, in series, an electric pump 74, an electrovalve 75 and a known type of one-way valve 76. Electric supply to pump 74 and electrovalve 75 is controlled by a timing block 77 controlled by a switch 78, for starting up engine 1, and the operating time of which is controlled by an essentially known type of thermal sensor comprising a twin-metal blade wound with a resistor supplied by the same electric circuit, the said sensor being conveniently arranged in thermal contact with the thermostatic unit 67 in Figure 3. As shown in Figure 5, pipe 73 comes out inside carburettor 37 through an end tube 80, the inlet of which is fitted with one-way valve 76, and the end of which terminates in a zone 81 inside carburettor 37 and between slow-running jet 82 and main jet 83.

The supply and control system for a mainly ethanol-powered internal combustion engine 1 according to the present invention operates as follows. When engine 1 is run normally, the heated cooling liquid comes out of engine 1 through thermostatic unit 67 and, via tubes 66 and 65, is sent to duct 62 on spacer plate 57 from which it is sent back to unit 67 via hole 70, duct 62' and tube 68, thus circulating hot water for heating carburettor 37 and the area around opening 61 through which the fuel mixture flows. Further heat is provided by circulating exhaust gas from exhaust pipe 5 along pipe 21 towards compartment 22. The percentage of exhaust gas recirculated into compartment 22 depends on the setting of diaphragm 13, which closes opening 11 to a greater or lesser degree, depending on the vacuum in intake pipe 23, which, via branch 26' of pipe 26 and branch 44, is sent to operating chamber 19 on pneumatic actuator 15.

With engine 1 idling, throttle 38 on carburettor 37 is practically closed, so that diaphragm 13 closes practically the whole of opening 11 and a maximum amount of exhaust gas is recirculated into compartment 22; and vice versa in the reverse condition wherein throttle 38 is wide open.

Thermal sensor 55, which, via pipe branch 26'', detects the vacuum inside intake pipe 23 and, via electrovalve 52, controls pneumatic actuator 31, operates in such a manner that, with a vacuum of over 90 mm/Hg inside intake pipe 23, diaphragm 32 is set so as to control the temperature of the air mixture supplied to carburettor 37 at around an average of 50°C. With a vacuum of less than 90 mm/Hg inside intake pipe 23, diaphragm 32 is set so as to shut hot-air input pipe 34 off completely and so allow only cold air to be supplied from pipe 33. In such a condition wherein throttle 38 on carburettor 37 is practically wide open (e.g. driving uphill or at maximum vehicle speed), and ambient temperature is relatively low, e.g. below 20°C, trouble would be encountered in supplying engine 1. The supply system according to the present invention, however, provides for overcoming this by maintaining diaphragm 32 in such a position so as to allow hot air to be supplied from pipe 34. As shown in Figure 1, below 20°C, thermal switch 50 activates circuit block 49 which, in turn, activates electrovalve 52 for connecting one-way valve 54, instead of thermal sensor 55, between operating chamber 19' on actuator 31 and branch 26. In like manner, the maximum vacuum formed inside intake pipe 23 is maintained (memorised) inside operating chamber 19' on pneumatic actuator 31, thus ensuring diaphragm 32 is set in such a manner as to allow hot air to be supplied from pipe 34.

In the same ambient temperature as described above, e.g. below 20°C, trouble might also be encountered when pulling away, following repeated control and release of the accelerator (e.g. when driving in dense traffic). Under such conditions, in fact, the amount of heat transferred by the recirculated exhaust gas to the fuel mixture may not be sufficient for maintaining the ignition characteristics of the mixture. The supply system according to the present invention provides for overcoming this drawback, however, in that, at below 20°C, circuit block 49 also controls, in addition to electrovalve 52, electrovalve 41 which cuts off direct communication, via branch 44, with chamber 19 on actuator 15 and connects branch 45 with delay valve 46. This provides for retarding adjustment of diaphragm 13 in relation to that of throttle 38 on carburettor 37, in such a manner as to ensure an initial period, during acceleration, in which sufficient exhaust gas is forced into compartment 22 for bringing the fuel mixture inside intake pipe 23 up to a suitable temperature for ensuring smooth operation of engine 1. To prevent the temperature of the fuel mixture inside intake pipe 23 from rising too high, e.g. over 90°C, this maximum temperature is detected by temperature switch 48 which, at such a threshold, activates electrovalve 40 which prevents the vacuum in intake pipe 23 from being sent to operating chamber 19 on actuator 15, and connects it to the outside atmospheric pressure via filter 42. The effect of this is to cause diaphragm 13 to open completely, thus reducing drastically the amount of heat transferred to the fuel mixture by the exhaust gas.

Finally, when starting up engine 1, particularly at temperatures below 20°C, the fuel mixture must consist of ethanol and petrol, preferably 80% of the former and 20% of the latter. As mixing such a fuel percentage inside the tank on carburettor 37 would have meant feeding a large volume of petrol (about 10 cc) into the tank, with consequent risk of flooding, the supply system according to the present invention (Figure 5) provides for feeding petrol in smaller amounts and to a point far more effective in terms of start-up performance, i.e. via tube 80, petrol is fed to point 81 halfway between slow-running jet 82 and main jet 83. Supplying the required amount of petrol is enabled by timing block 77 (Figure 4), which, via the temperature sensor already mentioned, controls power supply to pump 74 and electrovalve 75. Block 77 and, consequently, pump 74 and electrovalve 75 are supplied initially, by operating starting switch 78, from when engine 1 is started up by the starting motor, until power is cut off by the temperature sensor, which also detects the temperature of the cooling liquid. The operating time of timing block 77 therefore depends on the initial temperature of thermostatic unit 67, i.e. the higher the temperature, the shorter the operating time of block 77.

The supply and control system for a mainly ethanol-powered internal combustion engine according to the present invention obviously provides for a number of advantages permitting essentially smooth, reliable operation of engine 1 under various operating conditions.

## Claims

1. Supply and control system for a mainly ethanol-powered internal combustion engine (1), comprising first means (13, 15, 21, 22, 24) for heating, by means of the exhaust gas from the said engine (1), the fuel mixture in the intake pipe (23) on the said engine (1), as a function of the vacuum existing inside the said intake pipe (23), the said first means comprising valve means (13) located in one section (9) of at least one exhaust pipe (5) on the said engine (1) and the choke setting of which within the said section (9) is controlled by the said vacuum inside the said intake pipe (23); up- and downstream from the said section (9) pipes (21, 24) being connected for recirculating the said exhaust gas towards an area (22) surrounding the said intake pipe (23); and the said valve means (13) being controlled by a rod (14) on a pneumatic actuator (15) the operating chamber (19) of which communicates with the said intake pipe (23), over the said pneumatically-communicating portion behween the said pneumatic actuator (15) and the said intake pipe (23) second means (41) being provided for respectively retarding or not the said pneumatic communication; characterized in that the said second means (41) are selectively controlled by an ambient temperature sensor (50); and the said second means comprise a 3-way electrovalve (41) of which two ways (44, 45) are for switching and of which the common way is connected towards the said intake pipe (23), whereas the said two switch ways are connected to the said pneumatic actuator (15), one being connected directly and the other via an element (46) providing for the said delay in pneumatic communication.

2. System according to Claim 1, characterised by the fact that it comprises third means (48, 40) for preventing the said first means (13, 15, 21, 22, 24) from heating the said fuel mixture beyond a given fuel mixture temperature; the said third means comprising an element (48) for detecting the temperature of the said fuel mixture inside the said intake pipe (23), and valve means (40) controlled by the said sensor (48) for selectively cutting off pneumatic communication between the said intake pipe (23) and the said pneumatic actuator (15) and for alternatively providing for pneumatic communication between the said actuator (15) and the outside atmosphere.

3. System according to one of the foregoing claims, characterised by the fact that it comprises fourth means (52, 54) for regulating the temperature of the air supplied to the said engine (1) as a function of the maximum vacuum formed inside the said intake pipe (23); the said fourth means (52, 54) being selectively controlled by an ambient temperature sensor (50); and the said fourth means comprising a 3-way electrovalve (52) of which two ways are for switching and of which the common way is connected to the operating chamber (19') on a pneumatic actuator (31) having a rod (14') connected to means (32) for combined choking of relatively hotter and relatively colder air inlets (34, 33), whereas the other two switch ways are connected towards the said intake pipe (23), one being connected via a one-way valve (54), and the other via a thermal sensor (55) located in a zone through which the said mixed supply air is fed.

4. System according to one of the foregoing claims, characterised by the fact that it comprises fifth means (57) for circulating cooling liquid, heated by the said engine, about the said intake pipe (23); the said fifth means comprising a spacer plate (57) between the base of the carburettor (37) and the intake pipe (23) on the said engine (1); the said plate (57) having an opening (61) for the passage of the said fuel mixture for the said engine (1), and a duct (62) formed in the said plate (57), about the said opening (61) for recirculating the said liquid.

5. System according to one of the foregoing claims, characterised by the fact that it comprises sixth means (74, 75) activated by timing means (77) during start-up of the said engine (1) for supplying the carburettor (37) with extra petrol in addition to the said ethanol; the said timing means (77) comprising heat-sensitive means controlling power supply to means (74, 75) supplying the said petrol to the said carburettor (37).

6. System according to Claim 5, characterised by the fact that the said heat-sensitive means detect the temperature of the cooling liquid heated by the said engine (1).

7. System according to Claim 5 or 6, characterised by the fact that the said petrol is supplied to the said carburettor (37) at a point (81) halfway between the slow-running jet (82) and the main jet (83).

**Patentansprüche**

1. System zur Kraftstoffzufuhr und Kontrolle für einen Motor mit interner Verbrennung (1) betrieben hauptsächlich durch Äthylalk., bestehend aus ersteren Vorrichtungen (13, 15, 21, 22, 24) zur Erwärmung, mittels der Abgase des besagten Motors (1), des Kraftstoffgemisch im Einlaßkanal (23) des besagten Motors (1), als Funktion des Vakuums, das im Einlaßkanal (23) vorherrscht, die besagten ersteren Vorrichtungen bestehen aus Ventilen (13), angebracht in einem Teilbereich (9) von mindestens einem Abgaskanal (5) des besagten Motors (1) und dem Anlasser, angebracht in besagtem Teilbereich (9), und durch besagtes Vakuum kontrolliert, innerhalb des besagten Einlaßkanals (23), oberhalb und unterhalb der Strömung des besagten Teilbereichs (9), gleichzeitig sind die Kanäle (21, 24) verbunden, um die besagten Abgase wieder in Umlauf zu setzen in Richtung eines Raumes (22) rund um den besagten Einlaßkanal (23); besagte Ventile (13) werden durch eine Pleuelstange (14) auf einem pneumatischen Antrieb (15), dessen Arbeitsram (19) mit besagtem Einlaßkanal (23) in Verbindung steht, oberhalb des pneumatischen—verbundenen Teils zwischen besagtem pneumatischem Antrieb (15) und besagtem Einlaßkanal (23), zweitere Vorrichtung (41) wird versorgt, mit Verzögerung oder ohne, durch besagte pneumatische Verbindung; dadurch gekennzeichnet, daß zweitere Vorrichtung (41) durch einen Sensor für die bestehende Temperatur kontrolliert wird (50); und daß die besagten zweiteren Vorrichtungen aus einem 3-Wege-Elektroventil (41) bestehen, zwei Wege davon (44, 45) sind zum Einschalten, und der gemeinsame Wege davon ist mit besagtem Einlaßkanal (23) verbunden, an der Stelle, wo die besagten Einschaltwege mit dem besagten pneumatischen Antrieb (15) verbunden sind, ist einer direkt verbunden und der andere über ein Element (46), welches für die besagte Verzögerung in der pneumatischen Verbindung sorgt.

2. System nach Anspruch 1, dadurch gekennzeichnet, daß es dritte Vorrichtungen umfaßt (48, 40), um zu verhindern, daß die ersteren Vorrichtungen (13, 15, 21, 22, 24) die besagte Kraftstoffmischung über eine vorgegebene Temperatur für Kraftstoffmischungen hinaus aufheizen; daß die dritten Vorrichtungen aus einem Element (48) zur Temperaturmessung der besagten Kraftstoffmischung innerhalb des Einlaßkanals (23) bestehen, und Ventilvorrichtungen (40), die durch den besagten Sensor (48) kontrolliert werden, damit sie wahlweise die pneumatische Verbindung zwischen dem besagten Einlaßkanal (23) und dem pneumatischen Antrieb (15) unterbrechen und alternativ für die pneumatische Verbindung zwischen dem besagten Antrieb (15) und der äußeren Atmosphäre sorgen.

3. System nach einem der vorangegangenen Ansprüche, dadurch gekennzeichnet, daß es vierte Vorrichtungen (52, 54) umfaßt, die die Temperatur der Luft, die dem besagten Motor (1) zugeführt wird, regulieren, als Funktion eines maximalen Vakuums innerhalb des Einlaßkanals (23); die besagten vierten Vorrichtungen (52, 54) werden wahlweise durch einen Sensor für die bestehende Temperatur (50) kontrolliert; die besagten vierten Vorrichtungen bestehen aus einem 3-Wege-Elektroventil (52), von dem zwei Wege zum Einschalten sind und der gemeinsame Weg davon ist mit dem Arbeitsraum (19) verbunden auf einem pneumatischen Antrieb (31), der mit einer Pleuelstange (14') versehen ist, die mit Vorrichtungen (32) verbunden ist, die für gemeinsames Einlassen entsprechende wärmerer bzw. kälterer Luftströmungen sorgt (34, 33), an der Stelle, wo die beiden anderen Einschaltwege mit dem besagten Einlaßkanal (23) verbunden sind, ist einer mit einem Ein-Weg-Ventil (54) verbunden und der andere über einen Wärmesensor (55), der sich in dem Bereich befindet, durch den die besagte gemischte Zufuhrluft vorsorgt wird.

4. System nach einem der vorangegangenen Ansprüche, dadurch gekennzeichnet, daß es fünfte Vorrichtungen (57) umfaßt, die die Zirkulation die Kühlflüssigkeit gewährleisten, die durch besagten Motor aufgeheizt wird, über besagten Einlaßkanal (23); die besagten fünften Vorrichtungen bestehen aus einer Distanzscheibe (57) zwischen der Unterseite des Vergasers (37) und dem Einlaßkanal (23) des besagten Motors (1);

besagte Scheibe (57) hat eine Öffnung (61) für den Durchfluß des besagten Kraftstoffgemischs für besagten Motor (1) und eine Röhre (62), die auf besagter Scheibe (57), über der Öffnung (61) angebracht ist, um den Rückfluß der besagten Flüssigkeit zu gewährleisten.

5. System nach einem der vorangegangenen Ansprüche, dadurch gekennzeichnet, daß es sechste Vorrichtungen (74, 75) umfaßt, aktiviert durch timing-Vorrichtungen (77) während des Anlassens des besagten Motors (1), um die Versorgung des Vergasers (37) mit zusätzlichem Kraftstoff, außer dem besagten Äthylalkohol, zu sichern; die besagten timing-Vorrichtungen (77) umfassen wärmesensible Vorrichtungen, die die Versorgung der Vorrichtungen (74, 75) kontrollieren, indem sie den besagten Vergaser (37) mit besagtem Kraftstoff vorsorgen.

6. System nach Anspruch 5, dadurch gekennzeichnet, daß die besagten wärmesensiblen Vorrichtungen die Temperatur der Kühlflüssigkeit anzeigen, die durch den besagten Motor (1) erhitzt wird.

7. System nach Anspruch 5 oder 6, dadurch gekennzeichnet, daß der besagte Kraftstoff dem Vergaser (37) an einem Punkt zugeführt wird (81) der in der Mitte zwischen dem langsam fließenden Zufluß (82) und dem Hauptzufluß (83) liegt.

## Revendications

1. Système d'alimentation et de commande pour on moteur à combustion interne fonctionnant principalement à l'éthanol (1), comprenant des premiers moyens (13, 15, 21, 22, 24) pour chauffer, par l'intermédiaire des gaz d'échappement sortant du moteur (1), le mélange combustible dans le collecteur d'admission (23) du moteur (1) en fonction de la dépression existant à l'intérieur de ce collecteur d'admission (23), ces premiers moyens comprenant des moyens de valve (13) disposés dans une section (9) d'au moins un tuyau d'échappement (5) du moteur (1), moyens dont le dégré d'étranglement à l'intérieur de cette section (9) est commandé par la dépression régnant à l'intérieur du collecteur d'admission (23), des tuyaux (21, 24) étant montés en amont et en aval de cette section (9) pour recycler les gaz d'échappement en direction d'une zone (22) entourant le collecteur d'admission (23), et ces moyens de valve (13) étant commandés par une tige (14) sur un vérin pneumatique (15) dont la chambre de travail (19) communique avec le collecteur d'admission (23), des deuxièmes moyens (41) étant prévus sur la portion assurant la communication pneumatique entre le vérin pneumatique (15) et le collecteur d'admission (23) pour retarder respectivement ou non cette communication pneumatique, caractérisé en ce que les deuxièmes moyens (41) sont sélectivement commandés par un détecteur de température ambiante (50) et en ce que ces deuxièmes moyens comprennent une électrovanne à trois voies (41) dont deux voies (44, 45) sont prévues pour la commutation et dont la voie commune est raccordée au collecteur d'admission (23), tandis que les deux voies de commutation sont raccordées au vérin pneumatique (15), une voie étant raccordée directement et l'autre par l'intermédiaire d'un élément (46) procurant le retardement de la communication pneumatique.

2. Système selon la revendication 1, caractérisé en ce que qu'il comporte des troisièmes moyens (48, 40) pour empécher les premiers moyens (13, 15, 21, 22, 24) de réchauffer le mélange combustible au-delà d'une température de mélange combustible donnée, ces troisièmes moyens comprenant un élément (48) pour détecter la température du mélange combustible à l'intérieur du collecteur d'admission (23) et des moyens de vanne (40) commandés par ce détecteur (48) pour supprimer sélectivement la communication pneumatique entre le collecteur d'admission (23) et le vérin pneumatique (15) et pour permettre une communication pneumatique entre ce vérin (15) et l'atmosphère extérieure.

3. Système selon l'une des revendications précédentes, caractérisé en ce qu'il comporte des quatrièmes moyens (52, 54) pour régler la température de l'air fourni au moteur (1) en fonction de la dépression maximale formée à l'intérieur du collecteur d'admission (23), ces quatrièmes moyens (52, 54) étant sélectivement commandés par un détecteur de température ambiante (50) et comportant une électrovanne à trois voies (52) dont deux voies sont prévues pour la commutation et dont la voie commune est raccordée à la chambre de travail (19') d'un vérin pneumatique (31) ayant une tige (14') reliée à des moyens (32) pour l'étranglement combiné d'entrées d'airs relativement chaud et relativement froid (34, 33), tandis que les deux autres voies de commutation sont reliées au collecteur d'admission (23), une voie étant reliée par l'intermédiaire d'un clapet unidirectionnel (54) et l'autre par l'intermédiaire d'un détecteur thermique (55) disposé dans une zone à travers laquelle est amené cet air d'alimentation mélangé.

4. Système selon l'une des revendications précédentes, caractérisé en ce qu'il comporte des cinquièmes moyens (57) pour faire circuler le liquide de refroidissement, chauffé par le moteur, autour du collecteur d'admission (23), ces cinquièmes moyens comprenant une plaque de montage (57) entre la base du carburateur (37) et le collecteur d'admission (23) du moteur (1), cette plaque (57) ayant une ouverture (651) pour le passage du mélange combustible pour le moteur (1) et un conduit (62) formé dans cette plaque (57) autour de l'ouverture (61) pour le recyclage de ce liquide.

5. Système selon l'une des revendications précédentes, caractérisé en ce qu'il comporte des sixièmes moyens (74, 75) actionnés par des moyens de temporisation (77) lors du démarrage du moteur (1) pour amener au carburateur (37) un complément d'essence en plus de l'éthanol, les moyens de temporisation (77) comportant des moysns sensibles à la chaleur pour commander l'arrivée de courant aux moyens (74, 75) fournissant l'essence au carburateur (37).

6. Système selon la revendication 5, caractérisé en ce que les moyens sensibles à la chaleur détectent la température du liquide de refroidissement chauffé par le moteur (1).

7. Système selon la revendication 5 ou 6, caractérisé en ce que cette essence est amenée au carburateur (37) en un point (81) à mi-distance entre le gicleur de ralenti (82) et le gicleur principal (83).

Fig.1

EP 0 187 280 B1

Fig. 2

Fig. 3

EP 0 187 280 B1

Fig.4

Fig.5